# EUROPÄISCHE PATENTANMELDUNG

(11) **EP 3 751 174 A1**
(43) Veröffentlichungstag der Anmeldung: **16.12.2020**
(21) Anmeldenummer: 20020227.3
(22) Anmeldetag: 10.04.2016
(51) Int. Cl.: F16H 49/00, F16H 25/04

(54) **VERSTELLGETRIEBE**

(30) Priorität: 11.04.2015 DE 102015004405
(62) Teilanmeldung aus: 16735983.5
(71) Anmelder: Klindworth, Jan, 9400 Rorschach (CH)
(72) Erfinder: Klindworth, Jan, 9400 Rorschach (CH)

(57) **Zusammenfassung**

Die Erfindung betrifft ein Verstellgetriebe zum Verstellen zweier Bauteile mit einem Hohlrad (1), mit einem Mitnehmerrad (2), mit einem Wave-Generator (4) und einem elastischen Stirnrad (3), das aus mehreren Zahnelementen (3a) besteht, die mit der Kontaktfläche (3c) mit einem Mitnehmerbolzen (2a) in Kontakt stehen und die mit den Zähnen (3e) und (3d) mit einem Hohlrad (1) in Kontakt stehen und die sich dann auf dem Wave-Generator (4) abstütze, wobei sich das Zahnelement (3a) beim Drehen des Hohlrades (1) gegen das Mitnehmerrad (2) an dessen Mitnehmerbolzen (2a) abstützt, sodass das Zahnelement (3a) um einen hinsichtlich der Position variierenden Momentanpol (P1) schwenkt, der zwischen den Wirklinien der Kräfte (FL1, FL2, FR1, FR2) liegt, die an den Zähnen (3e) und (3d) angreifen, wobei der Momentanpol (P1) zwischen den Wirklinien dieser Kräfte (FL1, FL2, FR1, FR2) liegt, wobei eine Kraft (FW), die vom Wave-Generator (4) in das Zahnelement (3a) eingeleitet wird, eine reine Normalkraft ist und wobei die Zahnelemente (3a), die im Kraftfluss zwischen dem Hohlrad (1) und dem Mitnehmerrad (2) eine Kraft zum Verdrehen dieser beiden Räder (1, 2) gegeneinander übertragen, zwischen dem Hohlrad (1), den jeweils zugeordneten Mitnehmerbolzen (2a) und dem Wave-Generator (4) verspannt sind..

## Beschreibung

Die Erfindung betrifft ein Verstellgetriebe nach dem einteilig gefassten Patentanspruch 1.

WO 2011/000341 A1 betrifft bereits ein Verstellgetriebe mit einem Gehäuse, einem Abtriebselement und einer Exzenterwelle. Das Verstellgetriebe ist gekennzeichnet durch einen Sternzahn, der eine Vielzahl elastisch biegbarer Balkenelemente aufweist, die über eine Zahnkontur mit einer Hohlradzahnkontur in Kontakt stehen und die mit einer Abstützkontur an einer Stegkontur des Gehäuses anliegen.

Unter dem Markennamen "Harmonic Drive" sind Getriebe bekannt, die es in zwei Varianten gibt. In der ersten Variante haben die Getriebe ein innenverzahntes Hohlrad, einen dünnwandigen, außenverzahnten Topf und einen sogenannten Wellgenerator, der fachsprachlich auch als Wave-Generator bezeichnet wird.

Der aus einem ovalisierten Kugellager bestehende Wave-Generator wird dabei in den dünnwandigen, außenverzahnten Topf geschoben, so dass der ursprünglich runde Topf ovalisiert wird. Dieser Zusammenbau wird dann in das innenverzahnte Hohlrad geschoben. Bei Drehung der Innenseite des Wave-Generators ergibt sich eine übersetzte Drehbewegung am Hohlrad oder am Topf. Dieses Getriebe wird erfolgreich vermarktet, erfordert aber eine hohe Präzision in der Fertigung und hat keine genügend hohe Verdrehsteifigkeit für alle Anwendungsbereiche. Außerdem ist, bedingt durch den hohen Durchmesser des Wave-Generators, nur ein eingeschränkt guter Wirkungsgrad erzielbar.

Die zweite Variante des Harmonic-Drive-Getriebes besteht aus einem Wave-Generator, einem Verzahnungband mit einer Außenverzahnung, und zwei Hohlrädern mit einem Zähnezahlunterschied von Zwei. Das Verzahnungsband wird durch den Wave-Generator ovalisiert und dann in die beiden Hohlräder geschoben. Dieses Getriebe baut schmaler als die erste Variante, hat aber einen schlechteren Zahnkontakt zwischen dem Verzahnungsband und den Hohlrädern. Ansonsten gelten die gleichen Eigenschaften wie bei der ersten Variante.

Ein weiteres Getriebe wird in DE 2 143 493 A1 beschrieben. Hier wird ein Cyclogetriebe offenbart, bei dem die ursprünglich konzentrische Antriebswelle ersetzt wurde durch zwei, drei oder mehr Antriebswellen außerhalb des Mittelpunktes. Diese außerhalb des Mittelpunktes liegenden Antriebswellen werden dann über Zahnräder von einer konzentrischen Antriebswelle angetrieben. So erhält man ein zweistufiges Getriebe, das eine höhere Drehsteifigkeit erzeugt als das Cyclogetriebe. Diese Bauart wird heute von verschiedenen Herstellern vermarktet, und hat sich erfolgreich bei Roboteranwendungen etabliert. Nachteilig sind die hohe Bauteilmenge und der Gesamtaufwand.

WO 2008/028540 A1 offenbart ein Getriebe, das insbesondere als Koaxialgetriebe, Hohlwellengetriebe, Hypoidgetriebe Axialgetriebe oder Lineargetriebe ausgeführt ist. Das Getriebe ist mit einem Antriebselement, einem Element und einem Abtriebselement ausgeführt. Eine Übersetzung sowie eine Übertragung eines Antriebsmomentes erfolgt zwischen Antriebselement und Abtriebselement über eine Mehrzahl von bewegbaren Zahnsegmenten.

DE 102 47 207 A1 betrifft bereits einen Fahrzeugsitz mit einem Getriebe, das einen Exzenter mit einem Exzenterring aufweist, der eine Taumelbewegung ohne Rotation durchführt, sodass ein Antrieb der Getriebezähne im Wesentlichen ohne Reibschluss ihrer inneren Anlagefläche an dem Exzenterring ermöglicht wird.

WO 01/66974 A1 offenbart ein Wellgetriebe mit einem um seine Achse rotierenden Triebkern unrunden Querschnittes zum koaxialen Abwälzen einer ihn umgebenden, radial verformbaren radreifenförmigen Folge von miteinander gelenkig verbundenen Bögen in einem formstabilen Stützring etwas größeren Durchmessers. Aus einzelnen speichenförmig radial orientierten Stösseln ist ein Innenrad zusammengesetzt, dessen Stössel-Schäfte mit Füssen, die sich quer zur Achse auf der Aussenfläche des Triebkerns abstützen, gegenüberliegend mit Köpfen, die jeweils eine Bogenwand aufweisen, und etwa mittig dazwischen mit Anschlussprofilen ausgestattet sind, die für wechselseitige gelenkige Verbindungen der Stössel untereinander seitlich in peripherer Richtung vorragen.

Aus DE 341053 C, DE 10 2012 102 802 und DE 10 2013 110 015 sind weitere Getriebe bekannt. Bei diesen Getrieben gibt es jeweils einzelne Zahnsegmente, die in einem Zahnträger geführt sind und in ein Hohlrad eingreifen und von einem Exzenterelement in Bewegung versetzt werden.

Der Hauptproblempunkt bei diesen Getrieben ist die Rückwärtsbewegung der Zahnsegmente. Das Exzenterelement kann die Zahnsegmente sehr gut in die Hohlradverzahnung hineinbewegen. Das nachfolgende Herausbewegen, also die Rückwärtsbewegung, muss jedoch vom Hohlrad übernommen werden, und verlangt deswegen bestimmte Übertragungswinkel an der Hohlradverzahnung.

Eine Anwendung dieser Verstellgetriebe ist die Robotertechnik. An den Gelenkarmen eines Roboters werden hier die Getriebe zum Verstellen eingesetzt. Hier ist es besonders wichtig, dass die eingesetzten Getriebe besonders verdrehsteif sind und möglichst spielarm sind. Dies ist wichtig damit man Roboter schnell und präzise bewegen kann. Bei mittleren bis großen Industrierobotern werden hier vielfach Getriebe nach dem in DE 2 143 493 A1 offenbarten Prinzip eingesetzt. Es handelt sich dabei um eine Abwandlung des Cyclogetriebes. Während das Cyclogetriebe von einer Exzenterwelle angetrieben wird, gibt es beim Getriebe nach DE 2 143 493 A1 zwei, drei oder noch mehr Exzenterwellen. Die Exzenterwellen werden von einem Vorstufengetriebe angetrieben. Die Wälzlager in den Exzenterwellen können dann vorgespannt werden damit sich die Verdrehsteifigkeit weiter erhöht. Das erhöht den Bauteilaufwand und reduziert auch den Wirkungsgrad.

Nachteile der bekannten Getriebe sind also in der Verdrehsteifigkeit, Bauteileaufwand, Leistungsdichte und den Herstellkosten zu sehen.

Aufgabe der Erfindung nach Patentanspruch 1 ist es, ein Getriebe zu schaffen, das gegenüber dem Stand der Technik verbessert ist und eine höhere Verdrehsteifigkeit und/oder eine höhere Leistungsdichte aufweist und/oder zu geringeren Herstellkosten und/oder mit geringerem Bauteilaufwand zu fertigen ist.

Die Aufgabe wird erfindungsgemäß mit den Merkmalen von Patentanspruch 1 gelöst.

Gemäß Patentanspruch 1 ist ein erfindungsgemäßes Verstellgetriebe vorgesehen zum Verstellen zweier Bauteile mit einem Hohlrad, mit einem Mitnehmerrad, mit einem Wave-Generator und einem elastischen Stirnrad, das aus mehreren Zahnelementen besteht, die mit der Kontaktfläche mit einem Mitnehmerbolzen in Kontakt stehen und die mit den Zähnen und mit einem Hohlrad in Kontakt stehen und die sich dann auf dem Wave-Generator abstützen. Dabei stützt sich das Zahnelement beim Drehen des Hohlrades gegen das Mitnehmerrad an dessen Mitnehmerbolzen ab, sodass das Zahnelement um einen hinsichtlich der Position variierenden Momentanpol schwenkt, der zwischen den Wirklinien der Kräfte liegt, die an den Zähnen und angreifen, wobei der Momentanpol zwischen den Wirklinien dieser Kräfte liegt, wobei eine Kraft, die vom Wave-Generator in das Zahnelement eingeleitet wird, eine reine Normalkraft ist und wobei die Zahnelemente, die im Kraftfluss zwischen dem Hohlrad und dem Mitnehmerrad eine Kraft zum Verdrehen dieser beiden Räder gegeneinander übertragen, zwischen dem Hohlrad, den jeweils zugeordneten Mitnehmerbolzen und dem Wave-Generator verspannt sind.

Bei einer vorteilhaften Ausgestaltung ist vorgesehen, dass das Zahnelement symmetrisch ist und dass die Kontaktfläche in der Mitte angeordnet ist und dass die Zähne sowohl links als auch rechts von der Kontaktfläche angeordnet sind. Da somit die Kontaktfläche zwischen den Zähnen des Zahnelementes angeordnet ist, ist zwangsläufig auch der Mitnehmerbolzen ebenfalls zwischen den Zähnen des Zahnelementes angeordnet. Da sich das Zahnelement beim Drehen des Hohlrades gegen das Mitnehmerrad an dessen Mitnehmerbolzen abstützt, schwenkt das Zahnelement um einen hinsichtlich der Position variierenden Momentanpol, der zwischen den Wirklinien der Kräfte liegt, die an den Zähnen angreifen. Dadurch, dass der Momentanpol zwischen den Wirklinien dieser Kräfte liegt, kann die Kraft, die vom Wave-Generator in das Zahnelement eingeleitet wird, eine reine Normalkraft sein. Die Zahnelemente, die im Kraftfluss zwischen dem Hohlrad und dem Mitnehmerrad die Kraft zum Verdrehen dieser beiden Räder gegeneinander übertragen, sind dabei zwischen dem Hohlrad, den jeweils zugeordneten Mitnehmerbolzen und dem Wave-Generator verspannt.

Bei einer montagefreundlichen Ausführungsform kann vorgesehen sein, dass die Zahnelemente durch Verbindungselemente verbunden sind. Mit dieser Ausführungsform wird auch die Bauteilanzahl verringert und die Verbindungselemente können zur Rückstellung des Zahnelementes beim Rückhub des Wave-Generators genutzt werden.

Bei einer reibungsarmen Ausführungsform kann vorgesehen sein, dass der Wave-Generator aus einem Innenteil, einer Hülse, den Zylinderrollen, dem Lagerkäfig und der Außenhülse besteht. Somit handelt es sich dabei um einen Wave-Generator mit Wälzlagerung. Anstelle der Zylinderrollen können auch Wälzlagerkugeln vorgesehen sein.

Bei einer besonders vorteilhaften Ausführungsform kann vorgesehen sein, dass die Zahnelemente keine Drehmomente übertragen. Stattdessen werden von den Zahnelementen reine Kräfte übertragen.

Gemäß dem abhängigen Patentanspruch 6 ist vorgesehen, dass das Verstellgetriebe ein im Wesentlichen starres Hohlrad mit einer Innenverzahnung, ein elastisches Stirnrad und einen Wellgenerator aufweist, mit dem Zahnelemente des Stirnrades derart quer zu einer Getriebezentralachse verschiebbar sind, dass eine Außenverzahnung des in Richtung von der Getriebezentralachse weg verschobenen Zahnelementes in Eingriff mit der Innenverzahnung gebracht werden kann, sodass das Hohlrad relativ zum elastischen Stirnrad um die Getriebezentralachse in einer Drehrichtung drehbar ist, wobei das Stirnrad ein Mitnehmerrad mitnimmt, das dazu in der Drehrichtung mittels mehrerer Mitnehmerkörper an Zahnelementen des elastischen Stirnrades abgestützt ist, wobei in den Zahnelementen jeweils eine Ausnehmung vorgesehen ist, in der einer der Mitnehmerkörper mit umfangsmäßigen Spiel aufgenommen ist, wobei die Ausnehmungen an den bezüglich der Getriebezentralachse radial äußeren Endbereichen der Zahnelemente angeordnet sind. Eine derartige Anordnung am äußeren Ende ermöglicht es den Zahnelementen, im Betrieb des Verstellgetriebes um einen hinsichtlich der Position variierenden Momentanpol zu schwenken, der zwischen den Wirklinien von Kräften bleibt, die zwischen der Außenverzahnung des Zahnelementes und der Innenverzahnung des Hohlrades in Richtung eines weiteren Momentanpols. Dieser weitere Momentanpol ist der Momentanpol zwischen dem Hohlrad und dem jeweils betrachteten Zahnelement des elastischen Stirnrades. Infolgedessen ist eine Kraft, die vom Wellgenerator bzw. dessen Außenhülse auf das jeweilige Zahnelement übertragen wird, eine reine Normalkraft. Die Mitnehmerkörper können beispielsweise als Mitnehmerbolzen ausgeführt sein. Jedoch können die Mitnehmerkörper auch andere Bauteilgeometrien aufweisen, die auch gänzlich ohne zylindrische Mantelfläche auskommen. Mit diesen Bauteilgeometrien gehen die Vorteile von geringen Herstellungskosten und einem relativ geringen Bauteilaufwand einher.

In einer besonders platzsparenden und hinsichtlich der Belastungen der Zahnelemente optimierten Ausführungsform ist vorgesehen, dass die Ausnehmungen in der Richtung, die von der Getriebezentralachse weg weist, ausmünden. Dadurch sind die Ausnehmungen in Richtung der Innenverzahnung offen, so dass die Mitnehmerkörper sehr nahe bei der Innenverzahnung angeordnet sein können. Damit geht der Vorteil einher, dass die Kräfte infolge der Drehmomentübertragung zwischen Hohlrad und Mitnehmerrad die Zahnelemente ausschließlich an deren radial außen liegenden Endbereichen belasten, an denen auch die Zähne der Außenverzahnung angeordnet sind.

Bei einer besonders vorteilhaften Bauteilgeometrie kann vorgesehen sein, dass die jeweilige Ausnehmung durch eine Kontaktfläche zumindest mitbegrenzt ist, sodass je nach Drehrichtung des Stirnrades gegenüber dem Hohlrad entweder ein der einen Drehrichtung zugeordneter Kontaktbereich der Kontaktfläche oder ein einer entgegengesetzten Drehrichtung zugeordneter Kontaktbereich der Kontaktfläche mit dem Mitnehmerkörper in Kontakt kommen kann, jedoch nie beide Kontaktbereiche zugleich.

Bei einer weiteren Ausgestaltung ist vorgesehen, dass die Ausnehmungen jeweils an der Stirnseite des Zahnelementes ausmünden, die von der Getriebezentralachse abgewandt ist.

Bei einer besonders vorteilhaften Ausgestaltung kann vorgesehen sein, dass die jeweilige Ausnehmung von zwei Stegen mitbegrenzt ist, die beiderseits einer Symmetrieebene des Zahnelementes angeordnet sind, wobei jeder Steg zumindest einen Zahn, vorzugsweise mehrere Zähne, der Außenverzahnung aufweist, wobei die Zahnelemente beim Drehen des Hohlrades gegenüber dem Mitnehmerrad geringfügig um einen hinsichtlich der Position variierenden Momentanpol schwenken, der zwischen den Wirklinien von Kräften liegt, die an den Zähnen der beiden Stege angreifen.

Bei einer besonders drehzahlfesten und bauteilreduzierten Ausgestaltungsform kann vorgesehen sein, dass die einander benachbarten Zahnelemente mittels eines blattfederförmigen Verbindungselementes miteinander verbunden sind, das eine Rückstellkraft in Richtung des Wellgenerators bewirkt. Je stärker diese Verbindungselemente die Zahnelemente in Richtung der Getriebezentralachse drücken, desto drehzahlfester ist das Verstellgetriebe. Führt der Wellgenerator einen Hub aus und beschleunigt die Zahnelemente radial nach außen, so halten die blattfederartigen Verbindungselemente die Zahnelemente in Anlage mit dem Wellgenerator bzw. dessen Außenring.

Die Verbindungselemente können besonders vorteilhaft einteilig mit den Zahnelementen ausgeführt sein. Es ist jedoch auch möglich, die Verbindungselemente als separate Teile zu fertigen und mit den Zahnelementen zu verbinden. Das ermöglicht es, die Verbindungselemente aus einem anderen Werkstoff zu fertigen als die Zahnelemente. Ein solcher Werkstoff kann beispielsweise ein Federstahl sein. Im Falle eines sehr großen Verstellers können die Verbindungselemente beispielsweise an die Zahnelemente angeschraubt werden.

Insbesondere, wenn die blattfederförmigen Verbindungselemente aus Metall gefertigt sind, ist deren Steifigkeit relativ groß. Infolgedessen können sowohl die Stellkräfte zum Verschieben der Zahnelemente radial nach außen als auch die Stellkräfte zum Schwenken der Zahnelemente um den variierenden Momentanpol relativ groß werden. Um die Spannungen im Werkstoff zu reduzieren oder aber um die Verbindungselemente in zwei Dimensionen weicher zu machen und somit auch den Verschleiß zu reduzieren, kann vorgesehen sein, dass die Verbindungselemente in einer Ebene senkrecht zur Getriebezentralachse ein mehrfach gewelltes Profil aufweisen, das spiegelsymmetrisch zu einer weiteren Ebene ist, die
- mittig zwischen zwei benachbarten Zahnelementen liegt und
- die Getriebezentralachse beinhaltet.

Diese Spiegelsymmetrie stellt dabei sicher, dass die Stellbewegungen des Hohlrades gegenüber dem Mitnehmerrad in beiden Drehrichtungen in gleicher Weise und mit gleichen Kräften erfolgen können, sofern am Hohlrad oder am Mitnehmerrad kein äußeres Drehmoment anliegt.

Um die Bauteilanzahl noch weiter zu reduzieren, kann vorgesehen sein, dass das Stirnrad ein einteilig ausgeführtes Stirnradteil aufweist, das
- Stege,
- einen die beiden Stege des jeweiligen Zahnelementes verbindenden Bereich,
- einen am Wellgenerator anliegenden Kontaktbereich und
- die blattfederförmigen Verbindungselemente
umfasst, wobei das Stirnradteil aus einem Werkstoff hergestellt ist, der insbesondere Kunststoff, Sintermetall oder pulverspritzgegossenes Metall ist. Bei dem einteiligen Stirnradteil aus Kunststoff ist nicht ausgeschlossen, dass dieses Stirnrad auch Einsätze aufweist, die nicht aus Kunststoff bestehen. Solche Einsätze können beispielsweise vorgesehen sein, um hoch belastete Teile des Stirnrades zu verstärken. Demzufolge können die Einsätze aus einem besonders verschleißfesten reibungsarmen oder schlagzähen Werkstoff hergestellt sein. Beispielsweise können die Einsätze aus Metall gefertigt sein.

Bei einer besonders montagefreundlichen und steifen Ausführungsform des Verstellgetriebes, das eine hohe Leistungsdichte ermöglicht, kann vorgesehen sein, dass das Mitnehmerrad zwei Scheiben aufweist, die mittels der Mitnehmerkörper miteinander verbunden sind, wobei die eine der beiden Scheiben eine zentrale Ausnehmung aufweist, durch die ein Antriebsglied des Wellgenerators greift. Damit bildet das Mitnehmerrad eine Art Käfig für das Stirnrad.

Um eine reibungsarme Lagerung herzustellen und die Koaxialität des Mitnehmerrades gegenüber dem Hohlrad und der Getriebelängsachse sicherzustellen, kann vorgesehen sein, dass zumindest die andere Scheibe ein zentrales Lagerelement aufweist, mit dem das Hohlrad auf dem Mitnehmerrad gelagert ist.

Damit der Kontaktbereich des Zahnelementes am Mitnehmerkörper möglichst nahe der Innenverzahnung sein kann, ist bei einer vorteilhaften Ausgestaltung vorgesehen, dass die Mitnehmerkörper jeweils eine von der Getriebezentralachse weg weisende Stirnfläche aufweisen, die derart konvex geformt ist, dass sich zwischen den Mitnehmerkörpern und dem Zahnkopfdurchmesser der Innenverzahnung ein Spalt bildet, der kleiner ist als der Hub des Wellgenerators.

Weitere vorteilhafte Weiterbildungen und Ausführungsformen ergeben sich aus den Unteransprüchen und aus dieser Beschreibung.

Die Erfindung wird anhand von mehreren Ausführungsbeispielen näher erläutert, die in Zeichnungen dargestellt sind.

Es zeigen:
Figur 1 ein Verstellgetriebe, das in einer Ebene senkrecht zu einer Getriebe-Zentralachse geschnitten dargestellt ist, wobei das Verstellgetriebe unter anderem Zahnelemente aufweist,
Figur 2 ein Detail aus Figur 1 im Bereich eines Zahnelementes,
Figur 3 in einer Ansicht analog zu Figur 1 eine alternative Ausgestaltungsform des Verstellgetriebes, das ein Stirnrad aus Kunststoff aufweist,
Figur 4 in einer perspektivisch dargestellten Explosionszeichnung das Verstellgetriebe gemäß Figur 3,
Figur 5 ein Detail aus Figur 2,
Figur 6 eine alternative Ausführungsform des Zahnelementes und
Figur 7 eine weitere Ausführungsform des Zahnelementes.

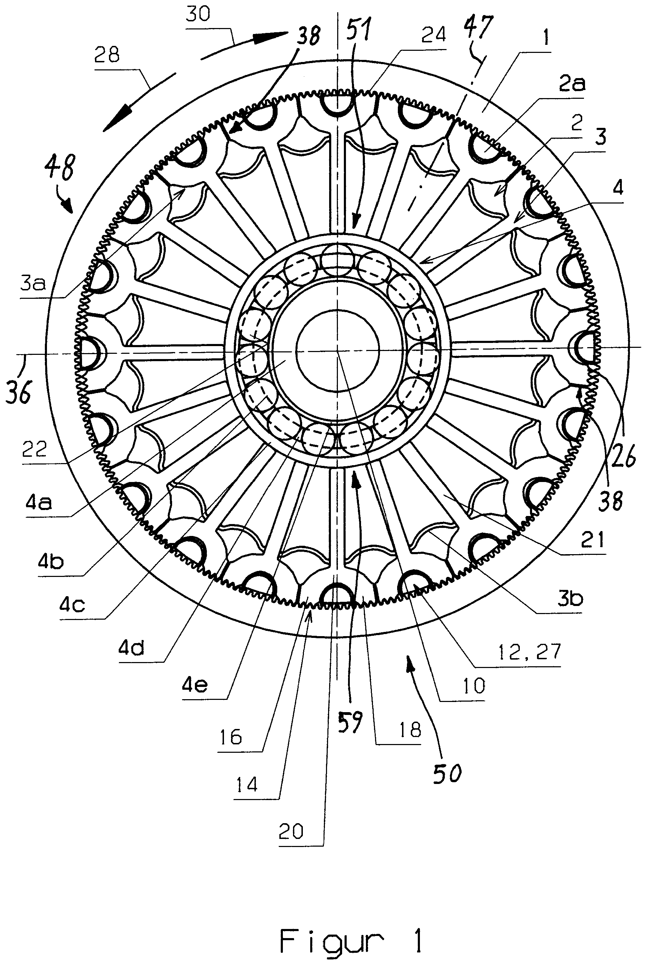

Figur 1 zeigt ein Verstellgetriebe, das in einer Ebene senkrecht zu einer Getriebe-Zentralachse 10 geschnitten dargestellt ist. In Figur 1 sieht man eine Ansicht auf die Hauptbestandteile des Getriebes. Es gibt ein Hohlrad 1, ein Mitnehmerrad 2, ein flexibles Stirnrad 3 und einen Wave-Generator 4, der im Folgenden auch als Wellgenerator 4 bezeichnet wird. Das Hohlrad 1, das Mitnehmerrad 2, das flexible Stirnrad 3 und der Wellgenerator 4 sind koaxial zueinander angeordnet, so dass sich die Getriebezentralachse 10 bildet.

Das Verstellgetriebe weist somit drei Getriebeglieder auf, von denen
- das erste Getriebeglied von einem Innenteil 4a des Wellgenerators 4 gebildet wird,
- das zweite Getriebeglied von dem flexiblen bzw. elastischen Stirnrad 3 und von dem mit dem Stirnrad 3 gekoppelten Mitnehmerrad 2 gebildet wird und
- das dritte Getriebeglied von dem Hohlrad 1 gebildet wird.

Das im Wesentlichen starre Hohlrad 1 ist das bezüglich der Getriebezentralachse 10 radial äußerste Getriebeglied und umschließt somit die radiale Außenseite des flexiblen Stirnrades 3.

Das flexible Stirnrad 3 besteht aus einzelnen Zahnelementen 3a und aus einzelnen Verbindungselementen 3b. Es wird rund hergestellt, und bekommt seine Form im Getriebe vom Wellgenerator 4. Das flexible Stirnrad 3 wird entweder durch pulvermetallurgisches Spritzgießen hergestellt, oder es wird spanend bearbeitet und Ausnehmungen 12 werden durch Wasserstrahlschneiden hergestellt.

Dabei sind die Zahnelemente 3a und die Verbindungselemente 3b zwar Bauteile mit unterschiedlicher Funktion. Jedoch weist das Stirnrad 3 ein einteilig ausgeführtes Stirnradteil 14 auf, das
- die Zahnelemente 3a jeweils mit zwei Stegen 16, 18,
- einen die beiden Stege 16, 18 des jeweiligen Zahnelementes 3a verbindenden Bereich 20,
- ein am Wave-Generator 4 anliegendes Anlageteil 21 und
- die Verbindungselemente 3b, die blattfederförmig sind,
umfasst.

Der Wave-Generator 4 ist in der Art eines Wälzlagers ausgeführt, wobei die Wälzkörper Zylinderrollen 4b sind, aber auch als Kugeln oder Tonnen ausgeführt sein können.

Der Wave-Generator 4 besteht aus dem Innenteil 4a, aus einer Hülse 4e, aus den Zylinderrollen 4b, einer Außenhülse 4c und einem Lagerkäfig 4d. Das Innenteil 4a besitzt eine elliptische, oder eine einer Ellipse ähnliche, Außenkontur 22 und ist das Antriebselement dieses Getriebes.

Infolge der elliptischen Form ist gewährleistet, dass jedes der Zahnelemente 3a zwei Hübe und zwei Rückhübe pro Umdrehung des Innenteils 4a durchführt.

Der Wave-Generator 4 kann jedoch auch eine andere Form aufweisen. Beispielsweise kann eine Nockenform vorgesehen sein, die nur einen Hub und einen Rückhub pro Umdrehung des Innenteils 4a bewirkt. Auch sind Formen möglich, die drei oder mehr Hübe und Rückhübe pro Umdrehung bewirken.

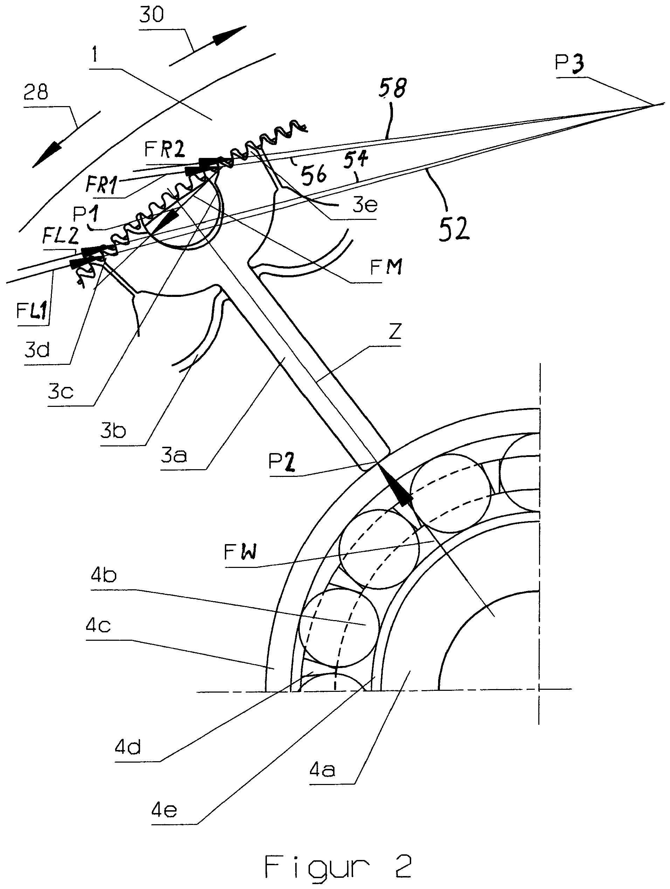

Das Innenteil des Wave-Generators 4 wird von einem Antriebsglied angetrieben und verformt über die Wälzkörper das flexible Stirnrad 3, das sich in den bezüglich der Getriebezentralachse 10 gegenüberliegenden Bereichen mit eine Innenverzahnung 26 im Eingriff befindet. Beim Drehen des Innenteils 4a verlagert sich damit der Bereich der beiden maximalen Zahneingriffe. Die Außenhülse 4c dreht sich jedoch nicht gegenüber dem Mitnehmerrad 2, da die Außenhülse 4c gegen das jeweilige Zahnelement 3a mit einer aus Fig. 2 ersichtlichen Kraft FW gedrückt wird, so dass zwischen den Zahnelementen 3a und der Außenhülse 4c eine Haftreibung auftritt, wohingegen die Außenhülse 4c gegenüber dem Innenteil 4a des Wellgenerators 4 mittels der Wälzkörper wälzgelagert ist.

Diese Wälzkörper sind zeichnungsgemäß in dem Käfig 4d geführt. In einer alternativen Ausgestaltungsform kann jedoch auch auf ein Käfig 4d verzichtet werden. Sowohl in der Alternative mit Käfig 4d als auch in der Alternative ohne Käfig 4d kann zwischen den Wälzkörpern bzw. zwischen dem Wälzkörper und dem Käfig 4d kein Spiel, ein geringes Spiel oder ein großes Spiel vorgesehen sein.

Eine Außenverzahnung 24 des Stirnrades 3 weist selbst dann nicht die gleiche Zahnteilung auf wie die Innenverzahnung 26 des Hohlrades 1, wenn die Außenverzahnung 24 als durchgängig, d. h. ohne Zahnverlust infolge von Zahnlücken 27, betrachtet wird. Stattdessen weist die Außenverzahnung 24 eine kleinere Zahnteilung auf, als die Innenverzahnung 26. Dadurch fehlt der Außenverzahnung gegenüber der Innenverzahnung ein halber Zahn pro 90°. Im Bezug auf eine ganze Umdrehung des Stirnrades 3 gegenüber dem Hohlrad 1 fehlen dem Stirnrad 3 somit zwei Zähne. Nach jeder Umdrehung des Innenteils 4a weist das Hohlrad 1 gegenüber dem Stirnrad 3 eine Winkeldifferenz auf, die zwei Zähnen entspricht. Ob das Stirnrad 3 gegenüber dem Hohlrad 1 vorauseilt oder zurückbleibt, hängt davon ab, ob das Innenteils 4a in die eine Drehrichtung 28 oder die entgegengesetzte Drehrichtung 30 dreht.

Mit dem Wellgenerator 4 sind die Zahnelemente 3a des Stirnrades 3 derart quer zu der Getriebezentralachse 10 verschiebbar, dass die Außenverzahnung 24 des in Richtung von der Getriebezentralachse 10 weg verschobenen Zahnelementes 3a in Eingriff mit der Innenverzahnung 26 des Hohlrades 1 gebracht werden kann. Dabei beteiligen sich nur die im Eingriff und im teilweisen Eingriff befindlichen Zähne der Außenverzahnungen 24 an der Kraftübertragung zwischen Hohlrad 1 und Stirnrad 3. Gänzlich aus dem Eingriff und der Kraftübertragung herausgenommen sind beispielsweise die Zahnelemente, die bezüglich der Getriebezentralachse 90° versetzt zu den Zahnelementen angeordnet sind, deren Außenverzahnung sich zum betrachteten Zeitpunkt im bestmöglichen Eingriff mit der Innenverzahnung befinden. Infolge einer Abstützung der Verzahnungszahnflanken aneinander ist das Hohlrad 1 relativ zum elastischen Stirnrad 3 um die Getriebezentralachse 10 in einer Drehrichtung 28 drehbar. Bei der Drehung nimmt das Stirnrad 3 das Mitnehmerrad 2 mit.

Auf dem Mitnehmerrad 2 sind die Mitnehmerbolzen 2a befestigt. Die Mitnehmerbolzen 2a werden dafür in Löcher auf dem Mitnehmerrad 2 gepresst, und dann außen abgeschliffen. Das Mitnehmerrad 2 und die Mitnehmerbolzen 2a können aber auch einteilig durch Sintern oder pulvermetallurgisches Spritzgießen (MIM) hergestellt werden, das fachsprachlich auch als metal-injection-molding bezeichnet wird. Das Hohlrad 1, das Mitnehmerrad 2 und der Wellgenerator 4 drehen sich dann konzentrisch.

Das Mitnehmerrad 2 ist in der Drehrichtung 28 mittels mehrerer der Mitnehmerbolzen 2a an dem Zahnelement 3a des elastischen Stirnrades 2 abgestützt. Dabei führt das Mitnehmerrad 2 das Stirnrad 3, das sich gegenüber dem Mitnehmerrad 2 bewegt, wenn das Mitnehmerrad 2 infolge eines angetriebenen Innenteils 4a gegenüber dem Hohlrad 1 gedreht wird. Da die Mitnehmerbolzen 2a auch eine von der teilweise zylindrischen Form abweichende Form aufweisen können, werden die Mitnehmerbolzen 2a im Folgenden auch als Mitnehmerkörper 2a bezeichnet. Dabei ist jedem Zahnelement 3a jeweils ein Mitnehmerkörper 2a zugeordnet, der in die Ausnehmung 12 des ihm zugeordneten Zahnelementes 3a eingreift. Somit ist der jeweilige Mitnehmerkörper 2a mit umfangsmäßigen Spiel in der ihm zugeordneten Ausnehmung 12 aufgenommen. Die Ausnehmungen 12 sind an den bezüglich der Getriebezentralachse 10 radial äußeren Endbereichen 38 (Fig. 1) der Zahnelemente 3a angeordnet.

Infolge dieser Ausnehmungen 12 bilden sich die vorstehend genannten Zahnlücken 27. Die Ausnehmungen 12 münden jeweils an der Stirnseite 31 des Zahnelementes aus, die von der Getriebezentralachse 10 abgewandt ist.

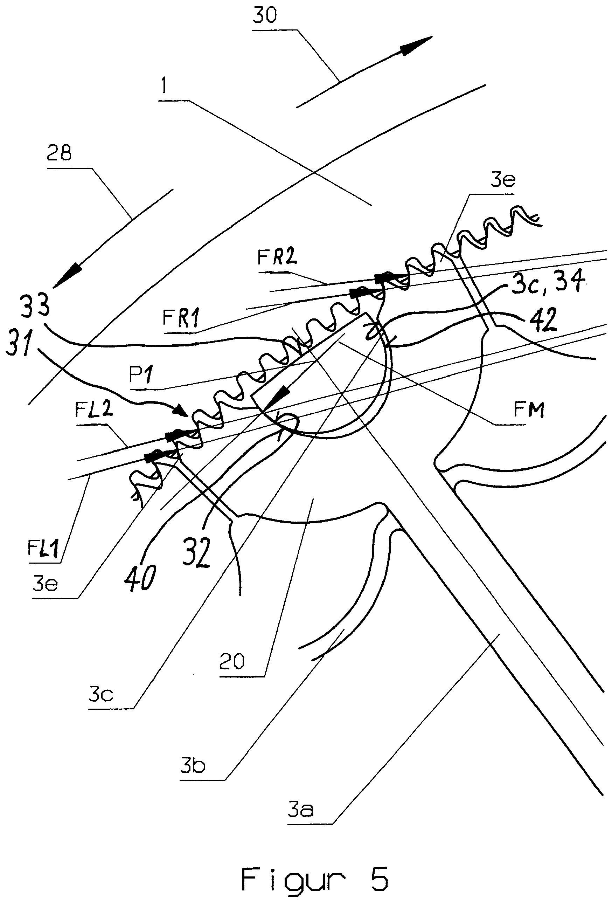

Unter anderem diese Ausnehmung 12 ist in der Detailansicht gemäß Figur 2 und Figur 5 dargestellt, die nur ein Zahnelement 3a vollständig zeigt, das im Folgenden näher erläutert wird, wobei die übrigen Zahnelemente 3a in gleicher Weise ausgeführt sind.

Somit wird in Figuren 2 und 5 das einzelne Zahnelement 3a beziehungsweise ein Detail des Zahnelementes 3a dargestellt. Es ist symmetrisch um die Z-Linie. In der Mitte befindet sich im oberen Bereich die Kontaktfläche 3c, die mit dem Mitnehmerbolzen 2a in Kontakt steht. Dann gibt es auf der linken Seite von der Z-Linie die Zähne 3d und auf der rechten Seite die Zähne 3e.

Die Ausnehmungen 12 sind radial außen durch einen Teil der Innenverzahnung 26 des Hohlrades 1 mitbegrenzt. Die Ausnehmung 12 ist überdies durch die Kontaktfläche 3c mitbegrenzt, die am Zahnelement 3a angeordnet ist. Somit kann je nach Drehrichtung 28 oder 30 des Stirnrades 3 gegenüber dem Hohlrad 1 entweder ein der einen Drehrichtung 28 zugeordneter Kontaktbereich 32 der Kontaktfläche 3c oder ein einer entgegengesetzten Drehrichtung 30 zugeordneter Kontaktbereich 34 der Kontaktfläche 3c mit dem Mitnehmerkörper 2a in Kontakt kommen. Da die Mitnehmerkörper 2a jeweils mit Umfangsspiel in der zugehörigen Ausnehmung 12 aufgenommen sind, können jedoch nie beide Kontaktbereiche zugleich mit dem Mitnehmerkörper 2a in Kontakt kommen.

Die Mitnehmerkörper 2a weisen jeweils eine von der Getriebezentralachse 10 weg weisende Stirnfläche 33 auf, die derart konvex geformt ist, dass sich zwischen den Mitnehmerkörpern 2a und dem Zahnkopfdurchmesser der Innenverzahnung 26 ein Spalt bildet, der kleiner ist, als der Hub des Wellgenerators 4.

Im Folgenden wird der Kontaktbereich 32, an dem sich der Mitnehmerkörper 2a abstützt, wenn das Hohlrad 1 in die eine Drehrichtung 28 gedreht wird, als linke Seite der Kontaktfläche 3c bezeichnet. In entsprechender Weise wird der Kontaktbereich 34, an dem sich der Mitnehmerkörper 2a abstützt, wenn das Hohlrad 1 in die entgegengesetzte Drehrichtung 30 gedreht wird, als rechte Seite der Kontaktfläche 3c bezeichnet.

In Figur 2 werden auch die angreifenden Kräfte auf ein Zahnelement 3a dargestellt.

Es gibt die Kräfte FL1 und FL2, die an den Zähnen 3d angreifen auf der linken Seite der Kontaktfläche 3c und die Kräfte FR1 und FR2 an den Zähnen 3e auf der rechten Seite der Kontaktfläche 3c, die alle vom Hohlrad 1 auf das Zahnelement 3a geführt werden. Dann gibt es die Kraft FM, die vom Mitnehmerbolzen 2a auf das Zahnelement 3a geführt wird. Der Wave-Generator 4 leitet dann die Kraft FW auf das Zahnelement 3a. Die Kraft FW ist eine reine Normalkraft, am Punkt P2 treten keine Querkräfte oder Drehmomente auf. Die entstehenden Querkräfte und Drehmomente stützt das Zahnelement 3a am Hohlrad 1 ab. Der Punkt P1 ist der Momentanpol des Zahnelementes 3a zwischen Mitnehmerbolzen 2a und dem Wellgenerator 4. Dadurch, dass der Punkt P1 zwischen den Wirklinien der FL Kräfte und der FR Kräfte liegt, ist die Kraft FW eine reine Normalkraft. Die FL Kräfte und die FR Kräfte teilen sich in Abhängigkeit vom Abstand zum Punkt P1 auf und bilden in Summe eine Gesamtkraft, die das Abtriebsmoment entstehen lässt.

Die Wirklinien der Kräfte FL1, FL2, FR1, FR2 treffen sich im Momentanpol P3 zwischen dem Hohlrad 1 und dem jeweils betrachteten Zahnelement 3a des elastischen Stirnrades 3.

Das Zahnelement 3a ist also nur an einer Stelle mit dem Mitnehmerrad 2 in Kontakt und die Verbindungselemente 3b übertragen keine lastabhängigen Drehmomente. Bei diesem Getriebe handelt es sich also um ein Schubkeilgetriebe mit einem flexiblen Stirnrad 3, bei dem die einzelnen Zahnelemente 3a nur an einer Stelle mit dem Mitnehmerrad 2 in Kontakt stehen.

Die Ausnehmung 12 ist von der Kontaktfläche 3c, respektive von den beiden Stegen 16,18, mitbegrenzt. Die Stege 16, 18 sind beiderseits einer Symmetrieebene des Zahnelementes 3a angeordnet, die von der Z-Linie und der Getriebe-Zentralachse 10 aufgespannt wird. Jeder Steg 16, 18 weist drei Zähne der Außenverzahnung 24 auf. Beim Drehen des Hohlrades 1 relativ zum Mitnehmerrad 2 schwenken die Zahnelemente 3a geringfügig um den hinsichtlich der Position variierenden Momentanpol P1, der zwischen den Wirklinien von den Kräften FL und FR liegt, die an den Zähnen der beiden Stege 16, 18 angreifen.

Da das Zahnelement 3a beim Drehen des Hohlrades 1 gegen das Mitnehmerrad 2 geringfügig um den Momentanpol P1 schwenkt, gleiten die Zahnflanken der Außenverzahnung 24 geringfügig an den Zahnflanken der Innenverzahnung 26 ab.

Die Zähne der Verzahnungen 24, 26 weisen dazu eine nicht genormte Freiformfläche auf, wobei die Innenverzahnung 26 des Hohlrades 1 konvexe Zahnflanken aufweist und die Außenverzahnung 24 des Zahnelementes 3a konkave Zahnflanken aufweist. Es ist jedoch auch die umgekehrte Anordnung möglich, bei der die Innenverzahnung 26 des Hohlrades 1 konkave Zahnflanken aufweist wohingegen die Außenverzahnung 24 des Zahnelementes 3a konvexe Zahnflanken aufweist.

Beim jeweiligen Steg 16, 18 ist der Zahn, der der Ausnehmung 12 am nächsten steht, mit einer Zahnflanke ausgeführt, die tiefer geht, als es dem Fußkreisdurchmesser der übrigen Zähne an der Außenverzahnung 24 entsprechen würde. Diese Zahnflanke des der Ausnehmung 12 am nächsten stehenden Zahnes verläuft dabei bis zu einer Kante. Die Kanten der beiden Stege 16, 18 bilden dabei die beiden Enden der Kontaktfläche 3c. Anstelle der Kanten könnten die Zahnflanken alternativ auch fließend in die Kontaktfläche 3c übergehen. Die Kontaktfläche 3c kann nicht über deren gesamte Länge in Kontakt mit dem Mitnehmerkörper 2a kommen, da der Ausnehmungsgrund stets vom Mitnehmerkörper 2a beabstandet ist. Lediglich die der Kontaktfläche 3c zugehörigen Kontaktbereiche 32, 34 beiderseits des Ausnehmungsgrundes können mit dem Mitnehmerkörper 2a in Kontakt kommen. Dabei kommt entweder der Kontaktbereich 32, der der einen Drehrichtung 28 zugeordnet ist, in Kontakt mit der einen konvexen Anlagefläche 40 des Mitnehmerkörpers 2a. Oder der Kontaktbereich 34, der der entgegengesetzten Drehrichtung 30 zugeordnet ist, kommt mit der anderen konvexen Anlagefläche 42 des Mitnehmerkörpers 2a in Anlage.

Jeweils zwei Zahnelemente 3a sind mittels der blattfederförmigen Verbindungselemente 3b miteinander verbunden, die eine Rückstellkraft in Richtung des Wave-Generators 4 bewirkten, sodass das jeweilige Zahnelement 3a in Richtung der Getriebezentralachse 10 verschoben wird, wenn sich der dem jeweiligen Zahnelement 3a zugeordnete Punkt P2 an der Mantelfläche der Außenhülse 4c des Wellgenerators 4 auf dem Weg des Rückhubes befindet. Der Punkt P2 liegt dabei an der Grenzfläche zwischen dem Zahnelement 3a und der Außenhülse 4c.

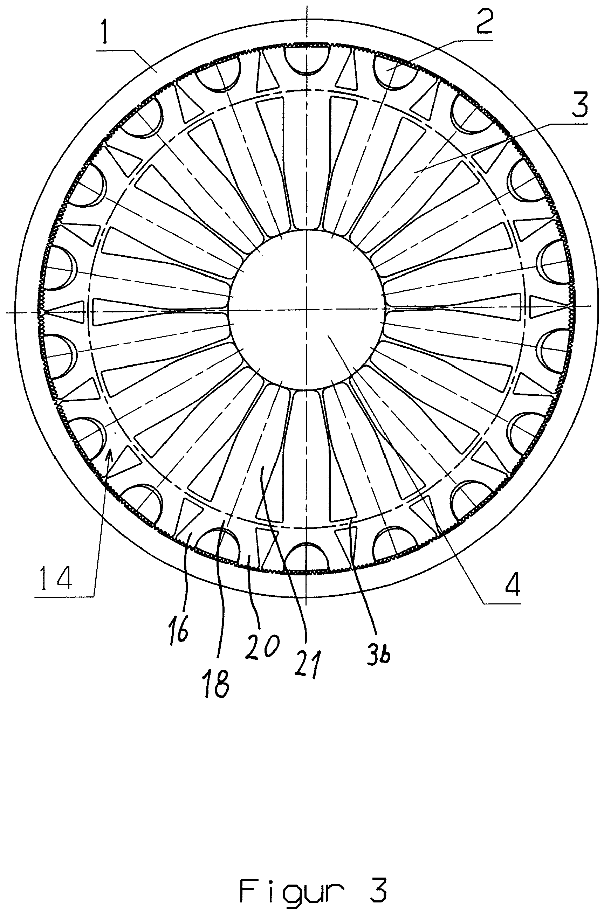

In Figur 3 ist eine alternative Ausführungsvariante eines Verstellgetriebes gezeigt, bei dem das Stirnradteil 14 aus Kunststoff, insbesondere im Spritzgussverfahren, hergestellt ist. Für Bauteile, die im Wesentlichen mit den Bauteilen der Ausführungsvariante gemäß Figuren 1, 2 und 5 übereinstimmen, werden gleiche Bezugsziffern verwendet.

Analog zu der ersten Ausführungsvariante weist ein flexibles Stirnrad 3 ein einteilig ausgeführtes Stirnradteil 14 auf, das
- Stege 16, 18,
- einen die beiden Stege 16, 18 des jeweiligen Zahnelementes 3a verbindenden Bereich 20,
- ein am Wave-Generator 4 anliegendes Anlagestück 21 und
- blattfederförmige Verbindungselemente 3b
umfasst.

In Figur 3 wird ein solches Getriebe gezeigt, wie es in einer Kunststoffvariante aussehen könnte. Der Wave-Generator 4 ist als Scheibe ausgebildet und beinhaltet keine Wälzkörper. Die Verbindungselemente 3b sind kürzer als bei der ersten Variante ausgebildet, da Kunststoff einen sehr viel geringeren E-Modul besitzt.

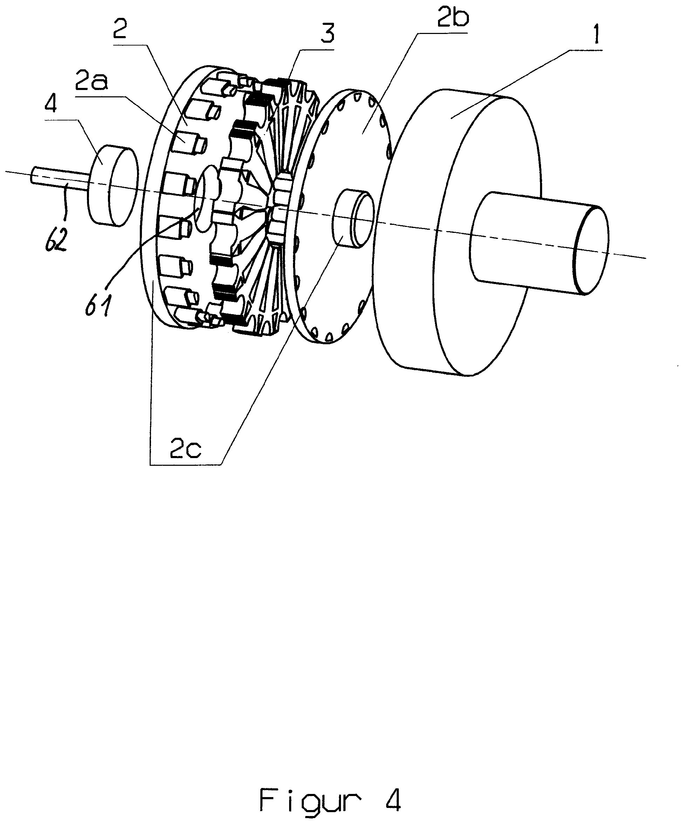

In Figur 4 wird eine Explosionsdarstellung des in Figur 3 gezeigten Getriebes dargestellt. Das Mitnehmerrad 2 ist als Käfig ausgebildet. Dazu gibt es einen Deckel 2b, der mit dem Mitnehmerrad 2 zwei über die Mitnehmerbolzen 2b verbunden wird. Das Hohlrad 1 wird dann auf dem Mitnehmerrad 2 gelagert, dazu gibt es ein Lagerelement 2c. Bei der Montage wird dann das elastische Stirnrad 2 zusammen mit dem Wave-Generator 4 in das Mitnehmerrad 2 montiert, bevor das Mitnehmerrad 2 mit dem Deckel 2b verschlossen wird.

Der Deckel 2b hat dabei ebenso wie ein Grundkörper 2d des Mitnehmerrades die Form einer Scheibe. Somit weist das Mitnehmerrad 2 zwei Scheiben 2b, 2d auf, die mittels der Mitnehmerkörper 2a miteinander verbunden sind, wobei die eine der beiden Scheiben 2b, 2d eine zentrale Ausnehmung 61 aufweist, durch die ein Antrieb 62 für den Wellgenerator 4 greift.

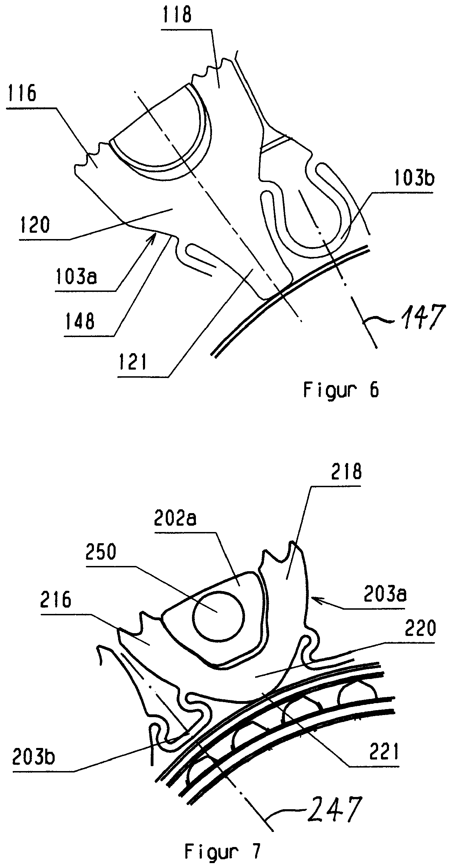

Figur 6 zeigt eine alternative Ausführungsform des Zahnelementes. Dieses mit der Bezugsziffer 103a bezeichnete Zahnelement besteht vorzugsweise aus Metall und ist einteilig mit zwei Verbindungselementen 103b ausgeführt, die ebenfalls in der Art einer Blattfeder wirksam sind und jeweils gewellt ausgeführt sind und dabei ein topfförmiges Profil aufweisen. Der Übergang von den beiden Stegen 116, 118 über den dieselben verbindenden Bereich 120 zum Anlagestück 121 erfolgt über eine bogenförmig auslaufende Außenkante 148.

Figur 7 zeigt eine weitere Ausführungsform des Zahnelementes. Dabei weist das Zahnelement 203a eine Form auf, die von den vorstehenden Ausführungsbeispielen abweicht. Zum einen sind pro Steg 216, 218 nur zwei Zähne vorgesehen und zum anderen ist das Anlagestück 221 unmittelbar im die Stege 216, 218 verbindenden Bereich 220 integriert, sodass das Anlagestück 221 unmittelbar in das u-förmige Zahnelement 203a integriert ist. Zudem weist der Mitnehmerkörper 202a eine andere Form auf, als in den vorstehenden Ausführungsbeispielen. So ist der Mitnehmerkörper 202a zum einen auf der Außenseite weniger ausgerundet, als in den vorangehenden Ausführungsbeispielen. Zum anderen weist der Mitnehmerkörper 202a eine Bohrung 250 auf, die parallel zur Getriebezentralachse ausgerichtet ist. Infolge dieser Bohrung 250 ist das Gewicht des Mitnehmerkörpers 202a und damit das Trägheitsmoment des Mitnehmerrades reduziert. Zusätzlich kann in die Bohrung 250 ein Gewinde eingebracht sein, in das eine Schraube eingeschraubt werden kann, die die Verbindung zwischen dem Mitnehmerrad und einem mit demselben verschraubten Deckel herstellt. Das blattfederförmige Verbindungselement 203b weist analog dem Ausführungsbeispiel gemäß Figur 6 ein topfförmiges Profil auf, dass jedoch die Form eines gestauchten Topfes hat.

Mithin weisen die Verbindungselemente 3b, 103b, 203b in den drei Ausführungsbeispielen Figur 1, Figur 6 und Figur 7 in einer Ebene senkrecht zur Getriebezentralachse 10 ein mehrfach gewelltes Profil auf. Diese Ebene ist deckungsgleich mit der Zeichnungsebene der Figuren 1, 6 und 7. Das gewellte Profil ist spiegelsymmetrisch zu einer weiteren Ebene 47 bzw. 147 bzw. 247, die
- zwischen zwei benachbarten Zahnelementen 3b bzw. 103b bzw. 203b liegt und
- die Getriebezentralachse 10 beinhaltet.

Die Explosionszeichnung nach Figur 4 stellt mit Ausnahme des Wellgenerators 4 und des Stirnrades 3 aus Kunststoff auch das im ersten Ausführungsbeispiel gemäß Figur 1 und 2 gezeigte Verstellgetriebe dar. Demzufolge ist hauptsächlich das in Figur 4 gezeigte Stirnrad 3 aus Kunststoff gegen das in Figur 1 und 2 gezeigte Stirnrad 3 aus Metall zu tauschen, um zu einer perspektivischen Detailansicht des Verstellgetriebes nach Figuren 1, 2 und 5 zu kommen.

Im Folgenden werden verschiedene Einbausituationen der beiden Verstellgetriebe anhand Figur 4 näher erläutert. Die drei Getriebeglieder in Form
- des Hohlrades 2,
- des Mitnehmerrades 2 und
- des Innenteils 4a vom Wellgenerator 4
können jeweils Eingangs- und Ausgangsglieder in verschiedenen Konfigurationen darstellen.

Bei dem Ausführungsbeispiel gemäß Figuren 1 und 2 weist die Innenverzahnung 26 des Hohlrades 242 Zähne auf, wohingegen das Stirnrad 120 Zähne aufweist. Dabei weist jedes der zwanzig Zahnelemente 3a insgesamt sechs Zähne auf, so dass sich aus der Berechnung 20×6=120 die besagten 120 Zähne des Stirnrades 3 ergeben. Infolge der Zahnlücke 27 am jeweiligen Zahnelement 3a fehlen sechs Zähne an der Außenverzahnung 24 jedes Zahnelementes 3a, so dass das Stirnrad 3 ungefähr, jedoch nicht genau, halb so viele Zähne aufweist, wie das Hohlrad 1. Das Hohlrad 1 weist zwei Zähne mehr auf, als die doppelte Anzahl der Zähne des Stirnrades 3, da eine Differenz nötig ist, um eine Getriebeübersetzung ungleich Eins herzustellen. Bei der bevorzugten Ausführungsform des Verstellgetriebes weist das Hohlrad 1 zumindest einen Zahn mehr auf, als das Stirnrad 3, da sich in diesem Fall die Verzahnungspaarung aus Innenverzahnung 26 und Außenverzahnung 24 besser gestalten lässt. In der bevorzugten Ausführungsform weist der Wellgenerator 4 eine Ellipsenform auf, sodass zwei Buckel 51, 59 entstehen, wodurch zwei Teilgetriebe 48, 50 entstehen. Die beiden Teilgetriebe 48, 50 sind auf gegenüberliegenden Seiten einer das Verstellgetriebe halbierenden Ebene 36 angeordnet, die die Getriebezentralachse 10 beinhaltet. Jedes Teilgetriebe 48, 50 durchläuft einen Zyklus, sodass jedes Zahnelement 3a pro halber Umdrehung des Innenteils 4a gegenüber dem Hohlrad 1 um einen Zahn weiter bewegt wird.

In einer alternativen Ausgestaltung könnte der Wellgenerator 4 auch drei gleichmäßig am Umfang verteilte Buckel aufweisen. In diesem Fall weist auch das Verstellgetriebe drei Teilgetriebe auf.

Ist die Anzahl der Zähne der Innenverzahnung 26 des Hohlrades 1 größer als die Anzahl der Zähne des Stirnrades 3 zuzüglich der Zähne, die infolge der Zahnlücken 27 fehlen, so dreht sich das Hohlrad 1 bei als stehend betrachtetem Mitnehmerrad 2 in die gleiche Drehrichtung wie das angetriebene Innenteil 4a.

Ist hingegen die Anzahl der Zähne der Innenverzahnung 26 des Hohlrades 1 kleiner als die Anzahl der Zähne des Stirnrades 3 zuzüglich der Zähne, die infolge der Zahnlücken 27 fehlen, so dreht sich das Hohlrad 1 bei als stehend betrachtetem Mitnehmerrad 2 in die Drehrichtung 28 bzw. 30, die der Drehrichtung 30 bzw. 28 des angetriebenen Innenteil 4a entgegengerichtet ist.

Das Verstellgetriebe weist einen relativ schlechten Wirkungsgrad auf beispielsweise im Vergleich zu marktüblichen Planetengetrieben, die als Leistungsübertragungsgetriebe im Antriebsstrang eines Automobils eingesetzt werden. Dennoch ist das Verstellgetriebe gemäß Figur 1 und Figur 2 aufgrund der Verwendung von Wälzkörpern für den Wellgenerator 4 nicht selbsthemmend. Unabhängig davon, ob das Hohlrad 1 oder das Mitnehmerrad 2 festgehalten wird, kann das angetriebene Innenteil 4a das jeweils nicht festgehaltene Rad - also das Mitnehmerrad 2 oder das Hohlrad 1 - antreiben.

In einer nur beispielhaften Konfiguration kann mit dem Verstellgetriebe das Hohlrad 1 relativ zum Mitnehmerrad 2 verstellt werden. In diesem Fall muss das Hohlrad 1 und/oder das Mitnehmerrad 2 gebremst oder von einem Drehmoment abgestützt werden. Das Innenteil 4a des Wellgenerators hingegen ist mit einem Antriebsmotor, beispielsweise einem Elektromotor oder einem Hydraulikmotor, gekoppelt. Wird nun das Innenteil 4a vom Antriebsmotor angetrieben bzw. um die Getriebe-Zentralachse 10 gedreht, so lässt sich eine extreme Untersetzung verwirklichen. Damit kann eine hohe Drehzahl des Antriebsmotors bei geringem Antriebsmoment in relativ genaue Stellbewegungen des Hohlrades 1 relativ zum Mitnehmerrad 2 umgesetzt werden, wobei zwischen dem Hohlrad 1 und dem Mitnehmerrad 2 ein relativ hohes Drehmoment und eine nur geringe Relativdrehzahl ansteht.

In einer weiteren Konfiguration wird das Verstellgetriebe genutzt, um eine hohe Drehzahl eines Antriebsmotors bei geringem Drehmoment in eine langsame Drehzahl des Hohlrades oder des Mitnehmerrades bei relativ hohem Drehmoment umzusetzen. Dazu wird entweder das Hohlrad oder das Mitnehmerrad festgehalten. Je nachdem, welches dieser beiden Getriebeglieder festgehalten wird, stellt das nicht festgehaltene andere Getriebeglied die Ausgangswelle dar, wohingegen das Innenteil des Wellgenerators das Eingangslied des Verstellgetriebes darstellt. Ein solches Getriebe kann beispielsweise für die Sitzverstellung von Automobilen, den Antrieb von Roboterarmen oder anderen Teilen eines Roboters genutzt werden. Anstelle des Festhaltens eines Getriebegliedes, kann natürlich auch ein Getriebeglied oder es können zwei Getriebeglieder abgebremst werden. In diesem Fall teilt sich ein Abtriebsmoment auf die beiden abgebremsten Getriebeglieder auf.

In weiteren alternativen Ausgestaltungen sind an dem jeweiligen Steg der Zahnelemente zwei, drei, vier oder fünf Zähne angeordnet. Es ist aber auch möglich, nur einen Zahn pro Steg vorzusehen.

### Bezugszeichenliste

- 1: Hohlrad
- 2: Mitnehmerrad
- 2a: Mitnehmerbolzen bzw. Mitnehmerkörper
- 2b: Deckel
- 2c: Lagerelement
- 2d: Grundkörper
- 3: flexibles Stirnrad
- 3a: Zahnelement
- 3b: blattfederförmige Verbindungselemente
- 3c: Kontaktfläche
- 4: Wellgenerator bzw. Wave-Generator
- 4a: Innenteil
- 4b: Zylinderrollen
- 4c: Außenhülse
- 4e: Hülse
- 10: Getriebezentralachse
- 12: Ausnehmungen
- 14: Stirnradteil
- 16: Steg
- 18: Steg
- 20: verbindender Bereich
- 21: Anlagestück
- 22: Außenkontur
- 24: Außenverzahnung
- 26: Innenverzahnung
- 27: Zahnlücken
- 28: Drehrichtung
- 30: entgegengesetzte Drehrichtung
- 31: Stirnseite
- 32: Kontaktbereich
- 33: Stirnfläche
- 34: Kontaktbereich
- 36: halbierende Ebene
- 38: Endbereich
- 40: konvexe Anlagefläche
- 42: andere konvexe Anlagefläche
- 47: weitere Ebene
- 48: erstes Teilgetriebe
- 50: zweites Teilgetriebe
- 51: Buckel
- 52, 54, 56, 58: Wirklinien
- 59: Buckel
- 61: zentrale Ausnehmung
- 62: Antrieb
- 103a: Zahnelement
- 103b: blattfederförmige Verbindungselemente
- 116: Steg
- 118: Steg
- 120: verbindender Bereich
- 121: Anlagestück
- 147: weitere Ebene
- 148: Außenkante
- 202a: Mitnehmerkörper
- 203a: Zahnelement
- 203b: blattfederförmige Verbindungselemente
- 216: Steg
- 218: Steg
- 220: verbindender Bereich
- 221: Anlagestück
- 247: weitere Ebene

## Patentansprüche

1. Verstellgetriebe zum Verstellen zweier Bauteile mit einem Hohlrad (1), mit einem Mitnehmerrad (2), mit einem Wave-Generator (4) und einem elastischen Stirnrad (3), das aus mehreren Zahnelementen (3a) besteht, die mit der Kontaktfläche (3c) mit einem Mitnehmerbolzen (2a) in Kontakt stehen und die mit den Zähnen (3e) und (3d) mit einem Hohlrad (1) in Kontakt stehen und die sich dann auf dem Wave-Generator (4) abstützen, wobei sich das Zahnelement (3a) beim Drehen des Hohlrades (1) gegen das Mitnehmerrad (2) an dessen Mitnehmerbolzen (2a) abstützt, sodass das Zahnelement (3a) um einen hinsichtlich der Position variierenden Momentanpol (P1) schwenkt, der zwischen den Wirklinien der Kräfte (FL1, FL2, FR1, FR2) liegt, die an den Zähnen (3e) und (3d) angreifen, wobei der Momentanpol (P1) zwischen den Wirklinien dieser Kräfte (FL1, FL2, FR1, FR2) liegt, wobei eine Kraft (FW), die vom Wave-Generator (4) in das Zahnelement (3a) eingeleitet wird, eine reine Normalkraft ist und wobei die Zahnelemente (3a), die im Kraftfluss zwischen dem Hohlrad (1) und dem Mitnehmerrad (2) eine Kraft zum Verdrehen dieser beiden Räder (1, 2) gegeneinander übertragen, zwischen dem Hohlrad (1), den jeweils zugeordneten Mitnehmerbolzen (2a) und dem Wave-Generator (4) verspannt sind.

2. Verstellgetriebe nach einem der vorhergehenden Ansprüche, **dadurch gekennzeichnet, dass** das Zahnelement (3a) symmetrisch ist und dass die Kontaktfläche (3c) in der Mitte angeordnet ist und dass die Zähne (3e) und die Zähne (3d) links bzw. rechts von Kontaktfläche (3c) angeordnet sind.

3. Verstellgetriebe nach einem der vorhergehenden Ansprüche, **dadurch gekennzeichnet, dass** die Zahnelemente (3a) durch Verbindungselemente (3b) verbunden sind.

4. Verstellgetriebe nach einem der vorhergehenden Ansprüche, **dadurch gekennzeichnet, dass** der Wave-Generator (4) aus einem Innenteil (4a), einer Hülse (4e), den Zylinderrollen (4b), dem Lagerkäfig (4d) und der Außenhülse besteht.

5. Verstellgetriebe nach einem der vorhergehenden Ansprüche, **dadurch gekennzeichnet, dass** die Zahnelemente (3a) keine Drehmomente übertragen.

6. Verstellgetriebe, nach einem der Ansprüche 1 bis 5, **dadurch gekennzeichnet, dass** das Verstellgetriebe ein im Wesentlichen starres Hohlrad (1) mit einer Innenverzahnung (26), ein elastisches Stirnrad (3) und einen Wellgenerator (4) aufweist, mit dem Zahnelemente (3a) des Stirnrades (3) derart quer zu einer Getriebezentralachse (10) verschiebbar sind, dass eine Außenverzahnung (24) des in Richtung von der Getriebezentralachse (10) weg verschobenen Zahnelementes (3a) in Eingriff mit der Innenverzahnung (26) gebracht werden kann, sodass das Hohlrad (1) relativ zum elastischen Stirnrad (3) um die Getriebezentralachse (10) in einer Drehrichtung (28 bzw. 30) drehbar ist, wobei das Stirnrad (3) ein Mitnehmerrad (2) mitnimmt, das dazu in der Drehrichtung (28 bzw. 30) mittels mehrerer Mitnehmerkörper (2a) an Zahnelementen (3a) des elastischen Stirnrades (3) abgestützt ist, wobei in den Zahnelementen (3a) jeweils eine Ausnehmung (12) vorgesehen ist, in der einer der Mitnehmerkörper (2a) mit umfangsmäßigen Spiel aufgenommen ist, wobei die Ausnehmungen (12) an den bezüglich der Getriebezentralachse (10) radial äußeren Endbereichen (38) der Zahnelemente (3a) angeordnet sind.

7. Verstellgetriebe nach Patentanspruch 6, **dadurch gekennzeichnet, dass** die jeweilige Ausnehmung (12) durch eine Kontaktfläche (3c) zumindest mitbegrenzt ist, sodass je nach Drehrichtung des Stirnrades (3) gegenüber dem Hohlrad (1) entweder ein der einen Drehrichtung (28) zugeordneter Kontaktbereich (32) der Kontaktfläche (3c) oder ein einer entgegengesetzten Drehrichtung (30) zugeordneter Kontaktbereich (34) der Kontaktfläche (3c) mit dem Mitnehmerkörper (2a) in Kontakt kommen kann, jedoch nie beide Kontaktbereiche (32, 34) zugleich.

8. Verstellgetriebe nach einem der Patentansprüche 6 oder 7, **dadurch gekennzeichnet, dass** die Ausnehmungen (12) jeweils an der Stirnseite (31) des Zahnelementes (3a) ausmünden, die von der Getriebezentralachse (10) abgewandt ist.

9. Verstellgetriebe nach einem der Patentansprüche 6 bis 8 **dadurch gekennzeichnet, dass** die jeweilige Ausnehmung (12) von zwei Stegen (16, 18) mitbegrenzt ist, die beiderseits einer Symmetrieebene des Zahnelementes (3a) angeordnet sind, wobei jeder Steg (16, 18) zumindest einen Zahn, vorzugsweise mehrere Zähne, der Außenverzahnung (24) aufweist, wobei die Zahnelemente (3a) beim Drehen des Hohlrades (1) gegenüber dem Mitnehmerrad (2) geringfügig um einen hinsichtlich der Position variierenden Momentanpol (P1) schwenken, der zwischen den Wirklinien (52, 54, 56, 58) von Kräften (FL1, FL2, FR1, FR2) liegt, die an den Zähnen der beiden Stege (16, 18) angreifen.

10. Verstellgetriebe nach einem der vorhergehenden Patentansprüche, **dadurch gekennzeichnet, dass** die einander benachbarten Zahnelemente (3a) mittels eines blattfederförmigen Verbindungselementes (3b) miteinander verbunden sind, das eine Rückstellkraft in Richtung des Wellgenerators (4) bewirkt.

11. Verstellgetriebe nach Patentanspruch 10, **dadurch gekennzeichnet, dass** die Verbindungselemente (3b, 103b, 203b) in einer Ebene senkrecht zur Getriebezentralachse (10) ein mehrfach gewelltes Profil aufweisen, das spiegelsymmetrisch zu einer weiteren Ebene (47, 147, 247) ist, die
- mittig zwischen zwei benachbarten Zahnelementen (3b) liegt und
- die Getriebezentralachse (10) beinhaltet.

12. Verstellgetriebe nach einem der vorhergehenden Patentansprüche, **dadurch gekennzeichnet, dass** das Stirnrad (3) ein einteilig ausgeführtes Stirnradteil (14) aufweist, das
- Stege (16, 18),
- einen die beiden Stege (16, 18) des jeweiligen Zahnelementes (3a) verbindenden Bereich (20),
- einen am Wellgenerator (4) anliegenden Kontaktbereich (**) und
- die blattfederförmigen Verbindungselemente (3b)
umfasst, wobei das Stirnradteil (14) aus einem Werkstoff hergestellt ist, der insbesondere Kunststoff, Sintermetall oder pulverspritzgegossenes Metall ist.

13. Verstellgetriebe nach einem der vorhergehenden Patentansprüche, **dadurch gekennzeichnet, dass** das Mitnehmerrad (2) zwei Scheiben (2b, 2d) aufweist, die mittels der Mitnehmerkörper (2a) miteinander verbunden sind, wobei die eine der beiden Scheiben eine zentrale Ausnehmung (61) aufweist, durch die der Antrieb (62) für den Wellgenerator (4) greift.

14. Verstellgetriebe nach Patentanspruch 13, **dadurch gekennzeichnet, dass** zumindest die andere Scheibe (2b) ein zentrales Lagerelement (2c) aufweist, mit dem das Hohlrad (1) auf dem Mitnehmerrad (2) gelagert ist.

15. Verstellgetriebe nach einem der vorhergehenden Patentansprüche, **dadurch gekennzeichnet, dass** die Mitnehmerkörper (2a) jeweils eine von der Getriebezentralachse (10) weg weisende Stirnfläche aufweisen, die derart konvex geformt ist, dass sich zwischen den Mitnehmerkörpern (2a) und dem Zahnkopfdurchmesser der Innenverzahnung (26) ein Spalt bildet, der kleiner ist, als der Hub des Wellgenerators (4).
